# EUROPÄISCHE PATENTSCHRIFT

(11) **EP 4 042 037 B1**
(45) Veröffentlichungstag und Bekanntmachung des Hinweises auf die Patenterteilung: **08.11.2023**
(21) Anmeldenummer: 20775178.5
(22) Anmeldetag: 11.09.2020
(51) Int. Cl.: F16F 15/134, F16F 15/14

(54) **TORSIONSDÄMPFER**
TORSIONAL DAMPER
AMORTISSEUR DE TORSION

(30) Priorität: 11.10.2019 DE 102019127399
(43) Veröffentlichungstag der Anmeldung: 17.08.2022
(73) Patentinhaber: Schaeffler Technologies AG & Co. KG, 91074 Herzogenaurach (DE)
(72) Erfinder: SCHNÄDELBACH, David, 77833 Ottersweier (DE)
(86) Internationale Anmeldenummer: PCT/DE2020/100792
(87) Internationale Veröffentlichungsnummer: WO 2021/069015

(56) Entgegenhaltungen:
- DE-A1-102012 219 798
- DE-A1-102013 201 981
- US-A1- 2015 362 041

## Beschreibung

Die Erfindung betrifft einen Torsionsdämpfer gemäß Patentanspruch 1 und eine Dämpfereinrichtung gemäß Patentanspruch 8.

Aus der DE 10 2013 201 981 A1 ist ein Drehschwingungsdämpfer in einem Antriebsstrang eines Kraftfahrzeugs bekannt. Der Drehschwingungsdämpfer weist einen Zweimassedämpfer und ein Fliehkraftpendel auf.

Als weiterer Stand der Technik wird auf die DE 10 2012 219 798 A1 verwiesen.

Es ist Aufgabe der Erfindung, einen verbesserten Torsionsdämpfer und eine verbesserte Dämpfereinrichtung für einen Antriebsstrang eines Kraftfahrzeugs bereitzustellen.

Diese Aufgabe wird mittels eines Torsionsdämpfers gemäß Patentanspruch 1 und einer Dämpfereinrichtung gemäß Patentanspruch 9 gelöst. Vorteilhafte Ausführungsformen sind in den abhängigen Ansprüchen angegeben.

Es wurde erkannt, dass ein verbesserter Torsionsdämpfer für eine Dämpfereinrichtung eines Antriebsstrangs eines Kraftfahrzeugs dadurch bereitgestellt werden kann, dass der Torsionsdämpfer drehbar um eine Drehachse lagerbar ist, wobei der Torsionsdämpfer wenigstens ein Eingangsteil, ein Energiespeicherelement und ein Ausgangsteil aufweist, wobei das Eingangsteil gegen die Wirkung des Energiespeicherelements um die Drehachse gegenüber dem Ausgangsteil verdrehbar ist, wobei das Ausgangsteil ein Mitnehmerelement und einen Ausgangsflansch mit wenigstens einem sich in Umfangsrichtung ersteckenden ersten Flanschabschnitt und einem in Umfangsrichtung an den ersten Flanschabschnitt angrenzenden und sich in Umfangsrichtung erstreckenden zweiten Flanschabschnitt aufweist, wobei der Ausgangsflansch eine sich über den ersten Flanschabschnitt und den zweiten Flanschabschnitt hinweg erstreckende Befestigungsstirnseite aufweist, wobei das Mitnehmerelement wenigstens einen sich in radialer Richtung erstreckenden ersten Anbindungsabschnitt aufweist, wobei der erste Anbindungsabschnitt an der Befestigungsstirnseite anliegt und mit dem zweiten Flanschabschnitt verbunden ist, wobei der Ausgangsflansch im ersten Flanschabschnitt wenigstens eine erste Befestigungsaufnahme aufweist, wobei die Befestigungsstirnseite des ersten Flanschabschnitts ausgebildet ist, an einer Anlagefläche eines Pendelflanschs eines Fliehkraftpendels anzuliegen und die erste Befestigungsaufnahme ausgebildet ist, ein erstes Befestigungsmittel zur drehfesten Befestigung des Pendelflanschs aufzunehmen.

Diese Ausgestaltung ermöglicht, optional einen Pendelflansch eines Fliehkraftpendels am Ausgangsflansch des Torsionsdämpfers zu befestigen, ohne dass hierfür die konstruktive Ausgestaltung des Torsionsdämpfers zu ändern ist. Somit kann je nach Auslegung der Dämpfereinrichtung die Dämpfereinrichtung den Torsionsdämpfer alleine oder mit Fliehkraftpendel aufweisen. Das Mitnehmerelement kann zusammen mit dem Ausgangsflansch einen Retainerraum zumindest abschnittsweise begrenzen, wobei in dem Retainerraum zumindest abschnittsweise das Energiespeicherelement angeordnet ist und durch das Mitnehmerelement und den Ausgangsflansch befestigt wird.

In einer weiteren Ausführungsform weist das Mitnehmerelement einen in Umfangsrichtung versetzt zu dem ersten Anbindungsabschnitt ausgebildeten zweiten Anbindungsabschnitt auf, wobei der erste Anbindungsabschnitt in Umfangsrichtung mit dem zweiten Anbindungsabschnitt eine Stegaufnahme begrenzt, wobei der Ausgangsflansch die Stegaufnahme mit der Befestigungsstirnseite in axialer Richtung begrenzt, wobei die erste Befestigungsaufnahme an der Stegaufnahme mündet und die Stegaufnahme zur Aufnahme eines Stegabschnitts des Pendelflanschs ausgebildet ist. Dadurch sind der erste Flanschabschnitt und erste Anbindungsabschnitt auf einem gemeinsamen Teilkreis um die Drehachse angeordnet. Dadurch ist der Torsionsdämpfer in radialer Richtung kompakt.

Erfindungsgemäß ist es besonders bauraumgünstig in axialer Richtung, wenn der erste Anbindungsabschnitt radial außenseitig des Mitnehmerelements ausgebildet ist und zumindest abschnittsweise in einer Drehebene zu der Drehachse ausgebildet ist.

In einer weiteren Ausführungsform sind in dem ersten Flanschabschnitt mehrere nebeneinander und in Umfangsrichtung versetzt zueinander angeordnete erste Befestigungsaufnahmen vorgesehen.

In einer weiteren Ausführungsform weist der Ausgangsflansch in dem zweiten Flanschabschnitt wenigstens eine zweite Befestigungsaufnahme oder mehrere in Umfangsrichtung nebeneinander angeordnete zweite Befestigungsaufnahmen auf, wobei ein zweites Befestigungsmittel in die zweite Befestigungsaufnahme eingreift und den ersten Anbindungsabschnitt mit dem zweiten Flanschabschnitt verbindet, wobei die erste Befestigungsaufnahme und die zweite Befestigungsaufnahme den gleichen Abstand zur Drehachse aufweisen.

In einer weiteren Ausführungsform erstreckt sich die erste Befestigungsaufnahme in axialer Richtung durch den Ausgangsflansch, wobei die Befestigungsaufnahme radial nach außen zu einer ersten äußeren Umfangsseite des Ausgangsflanschs offen ausgebildet ist. Dadurch kann insbesondere das erste Befestigungsmittel bei Ausgestaltung als Niet nahe an der äußeren Umfangsseite positioniert werden, so dass die Dämpfereinrichtung in radialer Richtung besonders kompakt ausgebildet ist.

In einer weiteren Ausführungsform weist die erste Befestigungsaufnahme einen ersten Aufnahmeabschnitt und einen radial außen zu dem ersten Aufnahmeabschnitt angeordneten zweiten Aufnahmeabschnitt auf, wobei der erste Aufnahmeabschnitt einen Querschnitt mit einer maximalen ersten Erstreckung in Umfangsrichtung aufweist, wobei der zweite Aufnahmeabschnitt sich zwischen der äußeren Umfangsseite und dem ersten Aufnahmeabschnitt erstreckt und sowohl an der äußeren Umfangsseite als auch in dem ersten Aufnahmeschnitt mündet, wobei der zweite Aufnahmeabschnitt eine zweite maximale Erstreckung in Umfangsrichtung aufweist, die geringer ist als die erste Erstreckung.

In einer weiteren Ausführungsform ist die erste Befestigungsaufnahme unbelegt und der erste Flanschabschnitt frei.

Die Dämpfereinrichtung für den Antriebsstrang eines Kraftfahrzeugs weist den oben beschriebenen Torsionsdämpfer, ein Fliehkraftpendel und wenigstens ein erstes Befestigungsmittel auf, wobei das Fliehkraftpendel einen Pendelflansch, wenigstens eine Pendelmasse und ein Koppelmittel aufweist, wobei das Koppelmittel die Pendelmasse mit dem Pendelflansch koppelt und ausgebildet ist, die Pendelmasse entlang einer vordefinierten Pendelbahn zu führen, wobei der Pendelflansch eine stirnseitig angeordnete Anlagefläche und eine weitere Befestigungsaufnahme aufweist, wobei die Anlagefläche des Pendelflanschs an der Befestigungsstirnseite am ersten Flanschabschnitt anliegt, wobei die weitere Befestigungsaufnahme und die erste Befestigungsaufnahme zumindest teilweise fluchtend zueinander ausgerichtet sind, wobei das erste Befestigungsmittel in die erste Befestigungsaufnahme und die weitere Befestigungsaufnahme zumindest abschnittsweise eingreift und den Pendelflansch mit dem Ausgangsflansch verbindet.

In dieser Ausgestaltung ist zusätzlich an dem Torsionsdämpfer das Fliehkraftpendel angeordnet, so dass Drehungleichförmigkeiten in einem über dem Torsionsdämpfer zu übertragenden Drehmoment besonders gut getilgt werden können. Auch können der Torsionsdämpfer und das Fliehkraftpendel auf unterschiedliche Erregerfrequenzen abgestimmt sein, so dass mittels der Dämpfereinrichtung zwei Erregerfrequenzen besonders gut getilgt werden können. Dadurch wird insgesamt der Antriebsstrang des Kraftfahrzeugs besonders leise.

In einer weiteren Ausführungsform weist der Pendelflansch wenigstens einen sich zumindest abschnittweise in einer Drehebene zu der Drehachse ausgebildeten Stegabschnitt und einen Ringabschnitt auf, wobei der Ringabschnitt umlaufend um die Drehachse ausgebildet ist, wobei der Stegabschnitt radial innen am Ringabschnitt ausgebildet ist und sich radial nach innen erstreckt, wobei der Stegabschnitt in die Stegaufnahme des Torsionsdämpfers zumindest abschnittsweise eingreift.

Nachfolgend wird die Erfindung anhand von Figuren näher erläutert: Dabei zeigen:
- Figur 1: ein Funktionsschaltbild eines Antriebsstrangs eines Kraftfahrzeugs;
- Figur 2: einen Halblängsschnitt durch eine konstruktive Ausgestaltung der in Figur 1 gezeigten Dämpfereinrichtung;
- Figur 3: eine perspektivische Darstellung eines Ausgangsteils des in Figur 2 gezeigten Torsionsdämpfers;
- Figur 4: einen Ausschnitt einer Draufsicht auf einen ersten Flanschabschnitt des in Figur 3 gezeigten Torsionsdämpfers;
- Figur 5: einen Halblängsschnitt durch die in Figur 1 gezeigte Dämpfereinrichtung mit einem montierten Fliehkraftpendel am Flanschabschnitt;
- Figur 6: eine perspektivische Darstellung eines Fliehkraftpendels der in Figur 5 gezeigten Dämpfereinrichtung;
- Figur 7: eine Draufsicht auf die Dämpfereinrichtung in montiertem Zustand;
- Figur 8: einen in Figur 7 markierten Ausschnitt der in Figur 7 gezeigten Dämpfereinrichtung;
- Figuren 9 und 10: einen in Figur 7 markierten Ausschnitt der in Figur 7 gezeigten Dämpfereinrichtung.

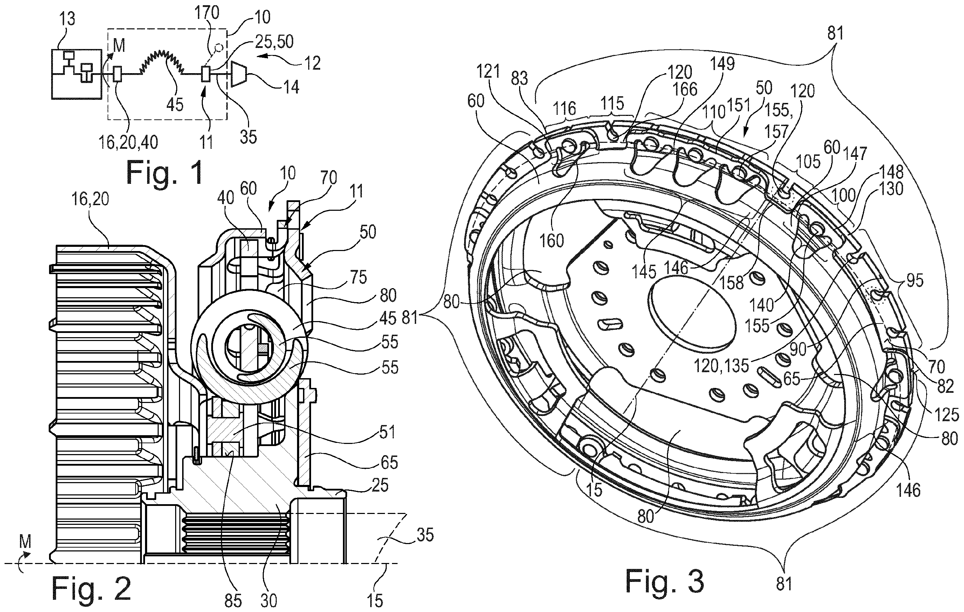

Figur 1 zeigt ein Funktionsschaltbild eines Antriebsstrangs 12 eines Kraftfahrzeugs.

In dem Funktionsschaubild ist mittels gerader Linien eine Drehmomentübertragung, die steif ausgebildet ist, schematisch dargestellt. Rotierende Massen um eine Drehachse 15 sind mittels Rechtecke symbolisch dargestellt.

Der Antriebsstrang 12 weist eine Dämpfereinrichtung 10, einen Antriebsmotor 13, eine Kupplung 16 und eine Übersetzungseinrichtung 14 auf. Der Antriebsmotor 13 ist beispielhaft als Brennkraftmaschine ausgebildet. Alternativ könnte auch der Antriebsmotor 13 eine Kombination aus Brennkraftmaschine und elektrischer Maschine, die auch als Hybridantrieb bezeichnet wird, sein. Die Brennkraftmaschine kann als Hubkolbenmaschine ausgebildet sein. Auch eine andere Ausgestaltung des Antriebsmotors 13 wäre denkbar. Die Übersetzungseinrichtung 14 kann beispielsweise als CVT-Getriebe oder als automatisches Schaltgetriebe ausgebildet sein.

Die Dämpfereinrichtung 10 weist einen Torsionsdämpfer 11, eine Eingangsseite 20 und eine Ausgangsseite 25 auf. Die Eingangsseite 20 kann drehmomentschlüssig über die Kupplung 16 mit dem Antriebsmotor 13, insbesondere der Brennkraftmaschine, schaltbar verbunden sein. Die Ausgangsseite 25 ist mittels einer Getriebeeingangswelle 35 mit der Übersetzungseinrichtung 14 drehfest verbunden.

Der Torsionsdämpfer 11 weist ein Eingangsteil 40, ein Energiespeicherelement 45 und ein Ausgangsteil 50 auf, wobei das Eingangsteil 40 gegen die Wirkung des Energiespeicherelements 45 relativ zum Ausgangsteil 50 um die Drehachse 15 verdrehbar ist. Das Energiespeicherelement 45 kann als Bogenfeder oder als Druckfeder 55 ausgebildet sein. Bei Einleitung eines mit einer Drehungleichförmigkeit belasteten Drehmoments M durch den Antriebsmotor 13 in die Eingangsseite 20 tilgt zumindest teilweise der Torsionsdämpfer 11 die Drehungleichförmigkeit.

Optional weist die Dämpfereinrichtung 10 wenigstens ein Fliehkraftpendel 170 auf (strichliert in Figur 1 dargestellt), das an dem Ausgangsteil 50 angeordnet ist. Das Fliehkraftpendel 170 ist ausgebildet, drehzahladaptiv die Drehungleichförmigkeit zu tilgen.

Figur 2 zeigt einen Halblängsschnitt durch eine konstruktive Ausgestaltung der in Figur 1 gezeigten Dämpfereinrichtung 10.

Beispielhaft ist die Eingangsseite 20 als Lamellenträger, insbesondere als Außenlamellenträger der Kupplung 16 ausgebildet. Auch eine andere Ausgestaltung der Eingangsseite 20 wäre hierbei denkbar.

Die Ausgangsseite 25 weist eine Nabe 30 auf, wobei in die Nabe 30 beispielsweise die Getriebeeingangswelle 35 (in Figur 1 strichliert dargestellt) eingreifen kann. Die Nabe 30 verbindet die Getriebeeingangswelle 35 drehfest mit der Ausgangsseite 25.

Das Eingangsteil 40 ist scheibenförmig ausgebildet und ist drehfest mit der Eingangsseite 20, beispielsweise mittels einer Nietverbindung 51, verbunden. Das Energiespeicherelement 45 kann ein oder mehrere Federn aufweisen. In Figur 1 umfasst beispielsweise das Energiespeicherelement 45 zwei ineinander angeordnete Druckfedern 55. Auch können in Umfangsrichtung die Druckfedern 55 unterschiedlich lang ausgebildet sein, so dass eine der beiden Druckfedern 55 einen Freiwinkel gegenüber der anderen Druckfeder 55 aufweist. Auch kann das Energiespeicherelement 45 wenigstens eine Bogenfeder aufweisen.

Das Ausgangsteil 50 weist ein Mitnehmerelement 60 und einen Ausgangsflansch 65 auf. Der Ausgangsflansch 65 erstreckt sich im Wesentlichen in radialer Richtung und ist radial innenseitig drehfest mit der Nabe 30 des Ausgangsflanschs 65 verbunden.

Der Ausgangsflansch 65 weist radial außenseitig eine Befestigungsstirnseite 70 auf. Die Befestigungsstirnseite 70 ist beispielhaft auf der zur Eingangsseite 20 zugewandten Seite angeordnet. Die Befestigungsstirnseite 70 kann beispielsweise in einer Drehebene zu der Drehachse 15 verlaufen. An der Befestigungsstirnseite 70 ist das Mitnehmerelement 60 angeordnet. Das Mitnehmerelement 60 begrenzt zusammen mit dem Ausgangsflansch 65 einen Retainerraum 75, wobei in dem Retainerraum 75 das Energiespeicherelement 45 angeordnet ist. Dabei fixieren das Mitnehmerelement 60 und der Ausgangsflansch 65 sowohl in axialer als auch in radialer Richtung das Energiespeicherelement 45. Dazu kann in dem Ausgangsflansch 65 ein Fenster 80 angeordnet sein, das radial zwischen der Nabe 30 und dem Mitnehmerelement 60 angeordnet ist. In das Fenster 80 kann abschnittsweise das Energiespeicherelement 45 eingreifen.

Das Eingangsteil 40 ist an einer ersten äußeren Umfangsseite 85 der Nabe 30 verdrehbar relativ zu der Nabe 30 gelagert. Das Eingangsteil 40 erstreckt sich in einer Drehebene zu der Drehachse 15 und durchgreift den Retainerraum 75 in radialer Richtung. Dabei liegt an einem ersten Endedes Energiespeicherelements 45 das Energiespeicherelements 45 an dem Eingangsteil 40 an. In Umfangsrichtung gegenüberliegend liegt das Energiespeicherelement 45 mit einem zweiten Ende an dem Ausgangsteil 50 an.

Das Drehmoment M wird über die Eingangsseite 20 in die Dämpfereinrichtung 10 eingeleitet. Das Drehmoment M wird über die Nietverbindung 51 an das Eingangsteil 40 geleitet. In Abhängigkeit des eingeleiteten Drehmoments M wird das Eingangsteil 40 gegen die Wirkung des Energiespeicherelements 45 in Umfangsrichtung relativ zu dem Ausgangsteil 50 verdreht und das Drehmoment M von dem Eingangsteil 40 wird über das Energiespeicherelement 45 an das Ausgangsteil 50 übertragen. Das Drehmoment M wird weiter von dem Ausgangsteil 50 an die Nabe 30 und von der Nabe 30 in die Getriebeeingangswelle 35 übertragen.

Ist der Antriebsmotor 13 als Brennkraftmaschine ausgebildet, so ist das Drehmoment M mit einer Drehungleichförmigkeit, insbesondere einer Drehschwingung, überlagert. Die Drehschwingung wird durch ein Hin- und Her-Verdrehen des Eingangsteils 40 relativ zum Ausgangsteil 50 zumindest teilweise getilgt, so dass das an der Ausgangsseite 25 in die Getriebeeingangswelle 35 anliegende Drehmoment M gleichmäßiger ist als das an der Eingangsseite 20 in den Torsionsdämpfer 11 eingeleitete Drehmoment M.

Figur 3 zeigt eine perspektivische Darstellung des Ausgangsteils 50 des in Figur 2 gezeigten Torsionsdämpfers 11.

Das Ausgangsteil 50 gliedert sich in mehrere identisch in Umfangsrichtung ausgebildete Teilbereiche 81, die sich jeweils in Umfangsrichtung aneinander anschließen. Die konstruktive Ausgestaltung des Ausgangsteils 50 wird anhand des im Folgenden beschriebenen Teilbereichs 81 erläutert. Der Teilbereich 81 erstreckt sich zwischen einem ersten Ende 82 und einem zweiten Ende 83 in Umfangsrichtung. Der Teilbereich 81 kann sich beispielsweise über 120° erstrecken.

Das Ausgangsteil 50 weist mehrere in Umfangsrichtung versetzt zueinander innenseitige Fenster 80 auf, wobei in jedes Fenster 80 jeweils ein Energiespeicherelement 45 eingreift. Die Fenster 80 sind beabstandet zu einer zweiten äußeren Umfangsseite 90 des Ausgangsflanschs 65 angeordnet. Jeweils ein Teilbereich 81 überlappt in radialer Richtung mit jeweils einem Fenster 80.

Der Ausgangsflansch 65 weist wenigstens einen ersten Flanschabschnitt 95 und einen zweiten Flanschabschnitt 100 auf. Der erste Flanschabschnitt 95 schließt sich an das erste Ende 82 des Teilbereichs 81 in Umfangsrichtung an. Der zweite Flanschabschnitt 100 schließt sich in Umfangsrichtung auf der zum ersten Ende 82 gegenüberliegenden Seite an den ersten Flanschabschnitt 95 unmittelbar an. Zusätzlich kann der Ausgangsflansch 65 auch einen dritten Flanschabschnitt 105, einen vierten Flanschabschnitt 110, einen fünften Flanschabschnitt 115 und einen sechsten Flanschabschnitt 116 aufweisen. Die Flanschabschnitte 95, 100, 105, 110, 115, 116 sind nebeneinander in Umfangsrichtung bezogen auf die Drehachse15 angeordnet.

Der dritte Flanschabschnitt 105 schließt sich auf einer dem ersten Flanschabschnitt 95 abgewandten Umfangsseite an den zweiten Flanschabschnitt 100 an. Der vierte Flanschabschnitt 110 schließt sich in Umfangsrichtung an den dritten Flanschabschnitt 105 auf der zum ersten Flanschabschnitt 95 abgewandten Seite des dritten Flanschabschnitts 105 an. Ebenso schließt sich der fünfte Flanschabschnitt 115 in Umfangsrichtung an den vierten Flanschabschnitt 110 auf der zum ersten Flanschabschnitt 95 abgewandten Seite des vierten Flanschabschnitts 110 an. Ferner schließt sich der sechste Flanschabschnitt 116 in Umfangsrichtung an den fünften Flanschabschnitt 115 auf der zum ersten Flanschabschnitt 95 abgewandten Seite des fünften Flanschabschnitts 115 an. Der sechste Flanschabschnitt 116 schließt sich an das zweite Ende 83 des Teilbereichs 81 an.

Über die Flanschabschnitte 95, 100, 105, 110, 115, 116 hinweg erstreckt sich die Befestigungsstirnseite 70.

In dem ersten Flanschabschnitt 95 ist wenigstens eine erste Befestigungsaufnahme 120 angeordnet. Vorzugsweise sind in dem ersten Flanschabschnitt 95 mehrere in Umfangsrichtung versetzt zueinander angeordnete erste Befestigungsaufnahmen 120 angeordnet. Die ersten Befestigungsaufnahmen 120 können in regelmäßigem Abstand in Umfangsrichtung zueinander angeordnet sein. Die ersten Befestigungsaufnahmen 120 sind auf einem gemeinsamen Teilkreis 121 um die Drehachse 15 angeordnet. Die erste Befestigungsaufnahme 120 ist als Durchgangsöffnung in dem Ausgangsflansch 65 ausgebildet und erstreckt sich in axialer Richtung von der Befestigungsstirnseite 70 hin zur axial gegenüberliegend angeordneten Stirnseite 125 des Ausgangsflanschs 65. Die Stirnseite 125 ist auf der zur Eingangsseite 20 abgewandten Seite des Ausgangsflanschs 65 ausgebildet und erstreckt sich in einer Drehebene zu der Drehachse 15. Die erste Befestigungsaufnahme 120 ist hin zu einer zweiten äußeren Umfangsseite 90 offen ausgebildet. Alternativ könnte die erste Befestigungsaufnahme 120 radial nach außen hin beispielhaft geschlossen ausgebildet sein.

Im ersten Flanschabschnitt 95 ist beispielhaft eine erste Anzahl von ersten Befestigungsaufnahmen 120 ausgebildet. In Figur 3 können beispielsweise drei erste Befestigungsaufnahmen 120 ausgebildet sein. Die erste Befestigungsaufnahme 120 dient zur Aufnahme eines ersten Befestigungsmittels 135 (strichliert in Figur 3 angedeutet).

Wie oben erläutert, schließt an den ersten Flanschabschnitt 95 in Umfangsrichtung (in Figur 2 in entgegengesetztem Uhrzeigersinn) der zweite Flanschabschnitt 100 an. Der zweite Flanschabschnitt 100 ist in Umfangsrichtung schlanker ausgebildet als der erste Flanschabschnitt 95. Im zweiten Flanschabschnitt 100 ist eine zweite Befestigungsaufnahme 130 ausgebildet. Die zweite Befestigungsaufnahme 130 kann identisch zu der ersten Befestigungsaufnahme 120 ausgebildet sein. In der Ausführungsform ist im zweiten Flanschabschnitt 100 nur eine einzige zweite Befestigungsaufnahme 130 im zweiten Flanschabschnitt 100 ausgebildet. Die zweite Befestigungsaufnahme 130 ist als Durchgangsöffnung in dem zweiten Flanschabschnitt 100 ausgebildet und erstreckt sich von der Befestigungsstirnseite 70 hin zu der Stirnseite 125. Auch wäre eine Mehrzahl von zweiten Befestigungsaufnahmen 130 möglich.

Der dritte Flanschabschnitt 105 und der fünfte Flanschabschnitt 115 sind im Wesentlichen identisch zu dem ersten Flanschabschnitt 95 ausgebildet, wobei jedoch die Anzahl der ersten Befestigungsaufnahmen 120 beispielhaft gegenüber dem ersten Flanschabschnitt 95 reduziert ist, da der dritte und fünfte Flanschabschnitt 105, 115 in Umfangsrichtung schmaler als der erste Flanschabschnitt 95 ausgebildet sind. Dabei weisen beispielhaft der dritte Flanschabschnitt 105 und der fünfte Flanschabschnitt 115 in Umfangsrichtung die gleiche Erstreckung auf.

Der vierte Flanschabschnitt 110 und der sechste Flanschabschnitt 116 sind im Wesentlichen identisch zu dem zweiten Flanschabschnitt 100 ausgebildet, wobei jedoch die Anzahl der zweiten Befestigungsaufnahmen 130 im vierten Flanschabschnitt 110 gegenüber dem zweiten Flanschabschnitt 100 und dem sechsten Flanschabschnitt 116 beispielhaft größer ist, da der vierte Flanschabschnitt 110 in Umfangsrichtung breiter als der zweite und sechste Flanschabschnitt 100, 116 ausgebildet ist. Der sechste Flanschabschnitt 116 weist in Umfangsrichtung die gleiche Erstreckung auf. In radialer Richtung sind die Flanschabschnitte 95, 100, 105 110, 115, 116 gleich breit ausgebildet.

Das Mitnehmerelement 60 weist einen ersten Anbindungsabschnitt 140 auf. Zusätzlich kann das Mitnehmerelement 60 einen zweiten Anbindungsabschnitt 145 aufweisen, der in Umfangsrichtung versetzt und beabstandet zu dem ersten Anbindungsabschnitt 140 angeordnet ist. Der erste Anbindungsabschnitt 140 kann in Umfangsrichtung schmaler ausgebildet sein als der zweite Anbindungsabschnitt 145. Der erste Anbindungsabschnitt 140 ist in einer Drehebene gemeinsam mit dem zweiten Anbindungsabschnitt 145 ausgebildet. Der erste Anbindungsabschnitt 140 ist laschenförmig ausgebildet und erstreckt sich von radial innen nach radial außen. Mit einem ersten radial innenseitigen Ende 147 ist der erste Anbindungsabschnitt 140 mit einem sich im Wesentlichen in axialer Richtung erstreckenden Halteabschnitt 146 verbunden. Der Halteabschnitt 146 trägt radial außenseitig das Energiespeicherelement 45. Ein erstes radial außenseitiges Ende 148 des ersten Anbindungsabschnitts 140 ist radial außenseitig etwa auf Höhe der zweiten äußeren Umfangsseite 90 angeordnet.

Der zweite Anbindungsabschnitt 145 ist im Wesentlichen identisch zu dem ersten Anbindungsabschnitt 140 ausgebildet und ist mit einem zweiten radial innenseitigen Ende 149 mit dem Halteabschnitt 146 verbunden. Ein zweites radial außenseitiges Ende 151 des zweiten Anbindungsabschnitts 145 ist radial vorzugsweise auf gleicher Höhe wie die zweite äußere Umfangsseite 90 angeordnet. Der zweite Anbindungsabschnitt 145 kann laschenförmig oder stegförmig sich von radial innen nach radial außen erstrecken.

Im ersten Anbindungsabschnitt 140 weist das Mitnehmerelement 60 eine dritte Befestigungsaufnahme 157 auf, wobei die dritte Befestigungsaufnahme 157 beispielsweise als Durchgangsbohrung in dem ersten Anbindungsabschnitt 140 ausgebildet ist.

In Umfangsrichtung begrenzt an einer Seite der ersten Anbindungsabschnitt 140 eine erste Stegaufnahme 150 seitlich. Die erste Stegaufnahme 150 ist in radialer Richtung nach außen hin offen. Die erste Stegaufnahme 150 wird in Axialrichtung durch den ersten Flanschabschnitt 95 begrenzt. In der ersten Stegaufnahme 150 mündet die erste Befestigungsaufnahme 120 in axialer Richtung. Die erste Befestigungsaufnahme 120 mündet seitlich versetzt zu dem ersten und zweiten Anbindungsabschnitt 140, 145.

In Umfangsrichtung gegenüberliegend zu der ersten Stegaufnahme 150 begrenzen der erste Anbindungsabschnitt 140 und der zweite Anbindungsabschnitt 145 gemeinsam eine zweite Stegaufnahme 158. In Axialrichtung wird an einer Seite die zweite Stegaufnahme 158 durch die Befestigungsstirnseite 70 am dritten Flanschabschnitt 105 begrenzt. Im zweiten Anbindungsabschnitt 145 ist wenigstens eine weitere dritte Befestigungsaufnahme 157 angeordnet.

Zusätzlich kann in Umfangsrichtung versetzt zu dem zweiten Anbindungsabschnitt 145 das Mitnehmerelement 60 einen dritten Anbindungsabschnitt 160 aufweisen, wobei der dritte Anbindungsabschnitt 160 in Umfangsrichtung versetzt zu dem zweiten Anbindungsabschnitts 145 angeordnet ist. Der dritte Anbindungsabschnitt 160 ist in Umfangsrichtung auf einer dem ersten Anbindungsabschnitt 140 abgewandten Seite angeordnet. Zwischen dem zweiten Anbindungsabschnitt 145 und dem dritten Anbindungsabschnitt 160 ist eine dritte Stegaufnahme 166 angeordnet, die durch den zweiten und dritten Anbindungsabschnitt 160 in Umfangsrichtung begrenzt wird. In Axialrichtung wird die dritte Stegaufnahme 166 durch die Befestigungsstirnseite 70 am fünften Flanschabschnitt 115 begrenzt.

Sowohl in der zweiten Stegaufnahme 158 als auch in der dritten Stegaufnahme 166 münden die im dritten bzw. fünften Flanschabschnitt 105, 115 angeordneten ersten Befestigungsaufnahmen 120.

In montiertem Zustand sind die zweite Befestigungsaufnahme 130 und die dritte Befestigungsaufnahme 157 fluchtend ausgerichtet. Dabei durchgreift ein zweites Befestigungsmittel 155 die zweite Befestigungsaufnahme 130 und die dritte Befestigungsaufnahme 157 und verbindet form- und/oder kraftschlüssig das Mitnehmerelement 60 mit dem Ausgangsflansch 65.

Das zweite Befestigungsmittel 155 kann beispielsweise als Niet ausgebildet sein. Auch eine andere Ausgestaltung des zweiten Befestigungsmittels 155 wäre denkbar.

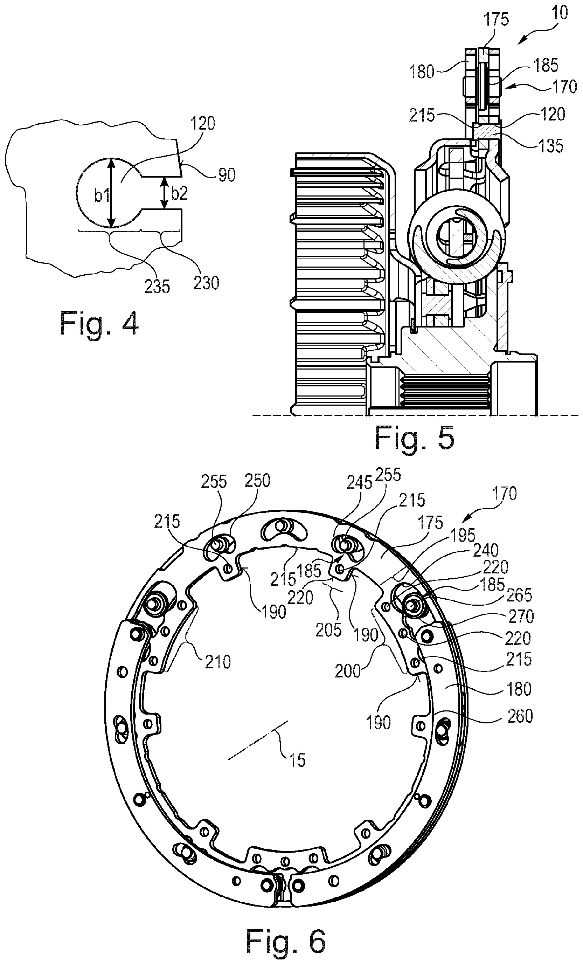

Figur 4 zeigt einen Ausschnitt einer Draufsicht auf den ersten Flanschabschnitt 95.

Die erste Befestigungsaufnahme 120 weist einen ersten Aufnahmeabschnitt 230 und einen radial außen zu dem ersten Aufnahmeabschnitt 230 angeordneten zweiten Aufnahmeabschnitt 235 auf. Der erste Aufnahmeabschnitt 230 weist einen Querschnitt mit einer maximalen ersten Erstreckung b1 in Umfangsrichtung auf. Der Querschnitt kann kreisförmig, elliptisch oder polygonförmig sein. Der zweite Aufnahmeabschnitt 235 erstreckt sich zwischen der zweiten äußeren Umfangsseite 90 und dem ersten Aufnahmeabschnitt 230 und mündet sowohl in der zweiten äußeren Umfangsseite 90 als auch in dem ersten Aufnahmeschnitt 230. Der zweite Aufnahmeabschnitt 235 weist eine zweite maximale Erstreckung b2 in Umfangsrichtung auf, die geringer ist als die erste maximale Erstreckung b1.

Figur 5 zeigt einen Halblängsschnitt durch die in Figur 1 gezeigte Dämpfereinrichtung 10 mit einem montierten Fliehkraftpendel 170.

Das Fliehkraftpendel 170 kann optional an dem Torsionsdämpfer 11 mittels des ersten Befestigungsmittels 135 befestigt sein. Das Fliehkraftpendel 170 weist einen Pendelflansch 175, wenigstens eine Pendelmasse 180 und wenigstens ein Koppelmittel 185 auf. Das Koppelmittel 185 kann beispielsweise als Kulissenführung ausgebildet sein. Die Pendelmasse 180 kann beispielsweise beidseitig des Pendelflanschs 175 angeordnet sein, wobei in Figur 5 sich der Pendelflansch 175 im Wesentlichen in einer Drehebene erstreckt.

Das Koppelmittel 185 ist ausgebildet, bei Einleitung der Drehungleichförmigkeit in den Pendelflansch 175 die Pendelmasse 180 zur Tilgung der Drehungleichförmigkeit des Drehmoments M entlang einer vordefinierten Pendelbahn zu führen.

Figur 6 zeigt eine perspektivische Darstellung des in Figur 5 gezeigten Fliehkraftpendels 170.

In der Ausführungsform weist das Fliehkraftpendel 170 mehrere in Umfangsrichtung versetzt zueinander angeordnete Pendelmassen 180 auf, wobei in Figur 6 nur ein Teil der Pendelmassen 180 dargestellt ist. In Figur 6 ist das Fliehkraftpendel 170 als außenliegendes Fliehkraftpendel 170 ausgebildet, wobei die Pendelmassen 180 beidseitig des Pendelflanschs 175 angeordnet sind. Auch könnte das Fliehkraftpendel 170 als innenliegendes Fliehkraftpendel 170 oder als eine Kombination aus innenliegendem und außenliegendem Fliehkraftpendel 170 ausgebildet sein.

Der Pendelflansch 175 weist eine auf einer dem Betrachter abgewandten Seite stirnseitig am Pendelflansch 175 angeordnete Anlagefläche 190 auf. Die Anlagefläche 190 ist in einer Drehebene senkrecht zur Drehachse 15 angeordnet.

Der Pendelflansch 175 weist wenigstens einen ersten Stegabschnitt 200 und einen Ringabschnitt 195 auf. Der Ringabschnitt 195 ist um die Drehachse 15 umlaufend ausgebildet und verläuft in einer Drehebene zu der Drehachse 15. Der erste Stegabschnitt 200 ist innenseitig am Ringabschnitt 195 angeordnet. Der erste Stegabschnitt 200 erstreckt sich von radial außen nach radial innen.

Vorzugsweise weist der Pendelflansch 175 einen zweiten Stegabschnitt 205 und gegebenenfalls einen dritten Stegabschnitt 210 auf, wobei die Stegabschnitte 200, 205, 210 in Umfangsrichtung versetzt zueinander angeordnet sind. Die Stegabschnitte 200, 205, 210 und der Ringabschnitt 195 sind einstückig und materialeinheitlich ausgebildet. Der erste Stegabschnitt 200 ist beispielhaft in Umfangsrichtung breiter ausgebildet als der zweite und dritte Stegabschnitt 205, 210. Eine Ausgestaltung des ersten Stegabschnitts 200 ist korrespondierend zu der ersten Stegaufnahme 150. Der zweite Stegabschnitt 205 ist korrespondierend zu der zweiten Stegaufnahme 158 und der dritte Stegabschnitt 210 kann korrespondierend zu der dritten Stegaufnahme 166 ausgebildet sein.

In radialer Richtung sind die Stegabschnitte 200, 205, 210 im Wesentlichen mit identischer Erstreckung ausgebildet, so dass eine innere Umfangsseite 220 an den Stegabschnitten 200, 205, 210 auf einer Kreisbahn um die Drehachse 15 über die Stegabschnitte 200, 205, 210 verläuft.

An den Stegabschnitten 200, 205, 210 ist die Anlagefläche 190 stirnseitig angeordnet, wobei die Anlagefläche 190 über die Stegabschnitte 200, 205, 210 hinweg beispielhaft in einer gemeinsamen Drehebene verläuft. Stirnseitig an dem Ringabschnitt 195 ist die Pendelmasse 180 beispielhaft beidseitig angeordnet. Das Koppelmittel 185 ist ferner ebenso am Ringabschnitt 195 abschnittsweise ausgebildet.

Jeder der Stegabschnitte 200, 205, 210 weist wenigstens eine vierte Befestigungsaufnahme 215 auf, die bohrungsartig parallel zur Drehachse 15 verlaufend ausgebildet ist.

Das Koppelmittel 185 weist in dem Ringabschnitt 195 wenigstens eine erste Ausnehmung 240 auf. Vorzugsweise weist das Koppelmittel 185 ferner eine zweite Ausnehmung 245 und gegebenenfalls eine dritte Ausnehmung 250 auf. Die zweite Ausnehmung 245 und die dritte Ausnehmung 250 sind beispielhaft nierenförmig ausgebildet, wobei ein Krümmungsmittelpunkt der zweiten und dritten Ausnehmung 245, 250 radial innenseitig zu der zweiten Ausnehmung 245 bzw. zur dritten Ausnehmung 250 angeordnet ist. Die erste Ausnehmung 240 ist in Umfangsrichtung breiter ausgebildet als die zweite und dritte Ausnehmung 245, 250.

Das Koppelmittel 185 weist für jede Ausnehmung 240, 245, 250 jeweils eine Pendelrolle 255 auf. Die Pendelrolle 255 durchgreift jeweils die zweite bzw. dritte Ausnehmung 245, 250. Die Pendelrolle 255 greift in eine der Pendelmasse 180 zugeordnete Pendelmassenausnehmung 260 ein. Die Pendelmassenausnehmung 260 ist nierenförmig ausgebildet und weist einen Krümmungsmittelpunkt auf, der radial außenseitig zu der Pendelmassenausnehmung 260 angeordnet ist. Die Pendelrolle 255 bildet zusammen mit der Pendelmassenausnehmung 260 und der zugeordneten zweiten bzw. dritten Ausnehmung 245, 250 eine Kulissenführung aus, wobei mittels der Kulissenführung die vordefinierte Pendelbahn, entlang der die Pendelmasse 180 bei Einleitung der Drehungleichförmigkeit in den Pendelflansch 175 pendelt, definiert festgelegt wird.

Die erste Ausnehmung 240 ist dabei radial außenseitig zu dem zweiten Stegabschnitt 205 und die dritte Ausnehmung 250 ist beispielhaft radial außenseitig zu dem dritten Stegabschnitt 210 angeordnet. Dabei weist die zweite Ausnehmung 245 eine radiale Überdeckung mit dem zweiten Stegabschnitt 205 und die dritte Ausnehmung 250 eine radiale Überdeckung mit dem dritten Stegabschnitt 210 auf. Dabei wird unter einer radialen Überdeckung verstanden, dass bei Projektion zweiter Komponenten, beispielsweise der zweiten Ausnehmung 245 und des zweiten Stegabschnitts 205, in radialer Richtung in eine Projektionsebene, in der die Drehachse 15 verläuft, sich in der Projektionsebene die zwei Komponenten, beispielsweise die zweite Ausnehmung 245 und der zweite Stegabschnitt 205, überdecken.

Die Pendelmasse 180 ist beispielhaft mit einer radialen Überdeckung zu dem Teilbereich 81 des Ausgangsteils 50 ausgebildet. Ebenso weist die erste Ausnehmung 240 eine radiale Überdeckung mit dem ersten Stegabschnitt 200 auf. Die erste Ausnehmung 240 ist in Umfangsrichtung breiter als die zweite und dritte Ausnehmung 245, 250 ausgebildet, da die erste Ausnehmung 240 mittels jeweils einem Abstandsbolzen 265 zweier in Umfangsrichtung nebeneinander angeordneter Pendelmassen 180 axial durchgriffen wird, um die beiden Pendelmassen 180 beidseitig des Pendelflanschs 175 axial zu befestigen. Zusätzlich kann an dem Abstandsbolzen 265 ein Dämpferring (Dämpferring?) 270 angeordnet sein.

Durch die radiale Überdeckung der Ausnehmungen 240, 245, 250 mit dem jeweils radial innenseitig angeordneten Stegabschnitt 200, 205, 210 kann in radialer Richtung das Fliehkraftpendel 170 besonders kompakt ausgebildet sein. Dadurch eignet sich das Fliehkraftpendel 175 besonders gut zur optionalen Befestigung am in den Figuren 1 bis 4 gezeigten Torsionsdämpfer 11.

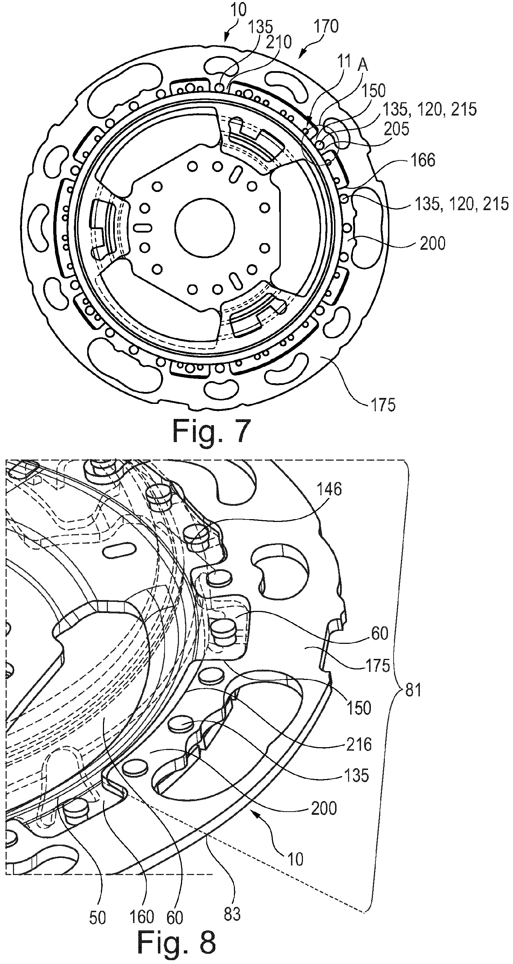

Figur 7 zeigt eine Draufsicht auf die Dämpfereinrichtung 10 in montiertem Zustand.

Dabei ist auf die Darstellung von zahlreichen Komponenten aus Übersichtlichkeitsgründen in Figur 7 verzichtet worden.

In Figur 7 ist das Fliehkraftpendel 170 am Torsionsdämpfer 11 befestigt. Dabei liegt die Anlagefläche 190 des Pendelflanschs 175 an der Befestigungsstirnseite 70 flächig an. Ferner sind der erste Stegabschnitt 200 und der erste Flanschabschnitt 95 in Axialrichtung überlappend angeordnet. Dabei wird unter einer axialen Überlappung verstanden, dass bei Projektion in axialer Richtung in eine Projektionsebene, die senkrecht zu der Drehachse 15 angeordnet ist, die beiden Komponenten, beispielsweise der ersten Stegabschnitt 200 und der erste Flanschabschnitt 95, sich in der Projektionsebene überdecken. Der erste Stegabschnitt 200 greift beispielhaft in die erste Stegaufnahme 150 ein. Ebenso greifen der zweite Stegabschnitt 205 in die zweite Stegaufnahme 158 und der dritte Stegabschnitt 210 in die dritte Stegaufnahme 166 ein, so dass auch der zweite Stegabschnitt 205 und der dritte Flanschabschnitt 105 sowie der dritte Stegabschnitt 210 und der fünfte Flanschabschnitt 115 axial überlappend angeordnet sind.

Dabei ist der Pendelflansch 175 derart zu dem Ausgangsflansch 65 positioniert, dass die erste Befestigungsaufnahme 120 und die vierte Befestigungsaufnahme 215 fluchtend ausgerichtet sind. Zur Befestigung und axialer Fixierung durchgreift das erste Befestigungsmittel 135 sowohl die erste Befestigungsaufnahme 120 als auch die vierte Befestigungsaufnahme 215.

Figur 8 zeigt einen Ausschnitt einer perspektivischen Ansicht der in Figur 7 gezeigten Dämpfereinrichtung 10.

Die erste Stegaufnahme 150 ist zu dem ersten Stegabschnitt 200 derart ausgebildet, dass zwischen dem Mitnehmerelement 60 und dem Pendelflansch 175 ein beispielhafter erster Spalt 216 angeordnet ist, um eine erleichterte Montage des Pendelflanschs 175 an dem Torsionsdämpfer 11 zu ermöglichen.

Von besonderem Vorteil ist hierbei, wenn im Halteabschnitt 146 des Mitnehmerelements 60 wenigstens eine erste Aussparung 217 vorgesehen ist, die bis zu dem Retainerraum 75 reicht. Die erste Aussparung 217 und die erste Stegaufnahme 150 gehen ineinander über. Der erste Stegabschnitt 200 durchgreift sowohl die erste Aussparung 217 als auch die erste Stegaufnahme 150 in radialer Richtung und ragt in den Retainerraum 75. Der erste Stegabschnitt 200 ist in radialer Richtung derart ausgebildet, dass er keinen Berührkontakt zu dem Energiespeicherelement 45 ausgebildet.

In Umfangsrichtung endet die erste Stegaufnahme 150 an dem zweiten Ende 83 des in Umfangsrichtung nächsten Teilbereichs 81 und wird durch den dritten Anbindungsabschnitt 160 des nächsten Teilbereichs 81 begrenzt.

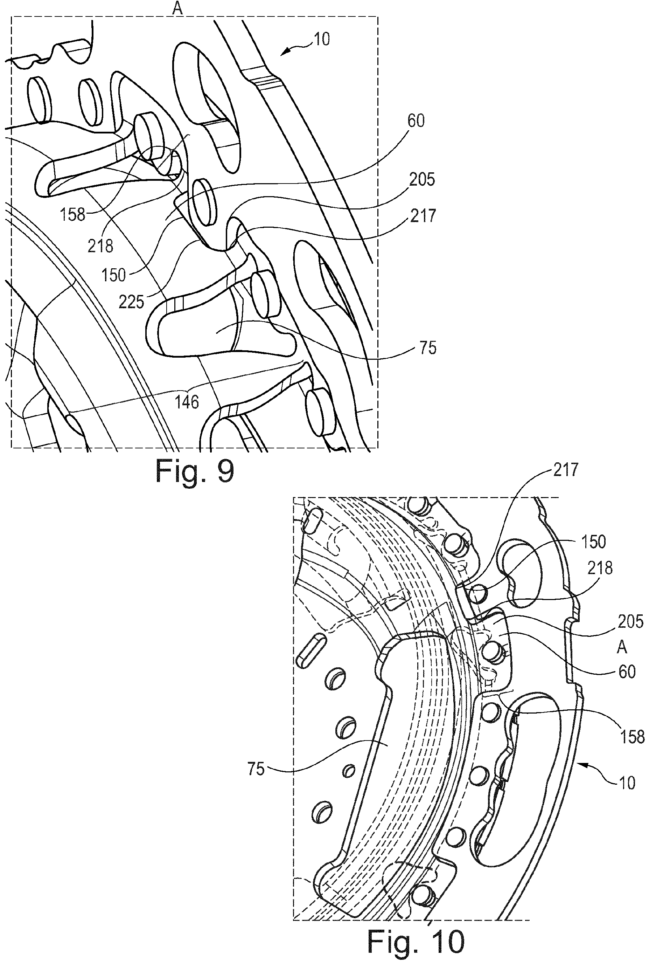

Figuren 9 und 10 zeigen einen in Figur 7 markierten Ausschnitt A der in Figur 7 gezeigten Dämpfereinrichtung 10.

Analog zu dem Eingriff des ersten Stegabschnitts 200 in die erste Stegaufnahme 150 ist der Eingriff des zweiten Stegabschnitts 205 in die zweite Stegaufnahme 158 ausgebildet. Auch die zweite Stegaufnahme 158 ist zu dem zweiten Stegabschnitt 205 derart ausgebildet, dass zwischen dem Mitnehmerelement 60 und dem Pendelflansch 175 ein beispielhafter zweiter Spalt 218 angeordnet ist, um eine erleichterte Montage des Pendelflanschs 175 an dem Torsionsdämpfer 11 zu ermöglichen.

Von besonderem Vorteil ist hierbei, wenn im Halteabschnitt 146 eine zweite Aussparung 225 vorgesehen ist, die bis zu dem Retainerraum 75 reicht. Die zweite Aussparung 225 erstreckt sich im Halteabschnitt 146 in axialer Richtung. Die zweite Aussparung und die zweite Stegaufnahme 158 gehen ineinander über. Der zweite Stegabschnitt 205 durchgreift sowohl die zweite Aussparung 225 als auch die zweite Stegaufnahme 158 in radialer Richtung und ragt in den Retainerraum 75. Der zweite Stegabschnitt 205 ist in radialer Richtung derart ausgebildet, dass er keinen Berührkontakt zu dem Energiespeicherelement 45 ausgebildet.

Analog zu dem Eingriff des ersten Stegabschnitts 200 in die erste Stegaufnahme 150 ist ebenso der Eingriff des dritten Stegabschnitts 210 in die dritte Stegaufnahme 166 ausgebildet.

Zusammengefasst ist in der Ausführungsform eine Außenkontur des Mitnehmerelements 60 derart ausgestaltet, dass zwischen dem Mitnehmerelement 60 und dem Pendelflansch 175 ein Berührkontakt vermieden wird, so dass ausschließlich Kräfte zwischen dem Ausgangsflansch 65 mittels des ersten Befestigungsmittels 135 mit dem Pendelflansch 175 ausgetauscht werden. Dadurch wird ein Toleranzausgleich zwischen Ausgangsteil 50 und Pendelflansch 175 ermöglicht.

Zur Montage der Dämpfereinrichtung 10 wird vorzugsweise während der Montage des Torsionsdämpfers 11 an dem Ausgangsflansch 65 zuerst der Pendelflansch 175 und zeitlich darauf folgend das Mitnehmerelement 60 positioniert. Die Positionierung erfolgt dabei so, dass das erste Befestigungsmittel 135 und das zweite Befestigungsmittel 155 montierbar ist. Dadurch sind das Mitnehmerelement 60 und der Pendelflansch 175 in einem Fertigungsschritt miteinander verbindbar, insbesondere vernietbar. Von besonderem Vorteil ist hierbei, wenn das erste und zweite Befestigungsmittel 135, 155 identisch ausgebildet ist. Insbesondere können das erste und zweite Befestigungsmittel 135, 155 eine identische Größe aufweisen. Zeitlich anschließend wird dann mit der weiteren Montage, beispielsweise des Energiespeicherelements an dem Mitnehmerelement 60 im Retainerraum 75, fortgefahren.

Die in den Figuren beschriebene Ausgestaltung der Dämpfereinrichtung 10 hat den Vorteil, dass nach Art eines Baukastens je nach Auslegung der Dämpfereinrichtung 10 das Fliehkraftpendel 170 an dem Ausgangsflansch 65 montiert werden kann, ohne dass hierfür ein anderer Ausgangsflansch 65 für den Torsionsdämpfer 11 zu montieren ist. Wird das Fliehkraftpendel 170, wie in Figur 2 gezeigt, nicht montiert, so ist die erste Befestigungsaufnahme 120 unbelegt und die Stegaufnahmen 150, 158, 166 offen.

Durch die in Figur 4 gezeigte Ausgestaltung der ersten Befestigungsaufnahme 120 kann die erste äußere Umfangsseite 85 radial besonders nahe an der ersten Befestigungsaufnahme 120 positioniert sein, so dass der Torsionsdämpfer 11 in radialer Richtung besonders kompakt ist.

Diese Ausgestaltung hat den Vorteil, dass mittels der zusätzlichen Montagemöglichkeit an dem Torsionsdämpfer 11, insbesondere am Ausgangsflansch 65 je nach Ausgestaltung des Antriebsmotors 13, die Dämpfereinrichtung 10 flexibel mit oder ohne Fliehkraftpendel 170 montiert werden kann, ohne dass dazu weitere als die in den Figuren 4 bis 9 erläuterten Komponenten notwendig sind. Insbesondere ist hier nicht notwendig, dass der Torsionsdämpfer 11 zur Befestigung des Fliehkraftpendels 170 weiter adaptiert werden muss.

Durch die in Umfangsrichtung sich wiederholende Ausgestaltung der Teilbereiche 81 wird eine zuverlässige Befestigung des Mitnehmerelements 60 und gegebenenfalls des Pendelflanschs 175 am Ausgangsflansch 65 sichergestellt.

### Bezugszeichenliste

- 10: Dämpfereinrichtung
- 11: Torsionsdämpfer
- 12: Antriebsstrang
- 13: Antriebsmotor
- 14: Übersetzungseinrichtung
- 15: Drehachse
- 16: Kupplung
- 20: Eingangsseite
- 25: Ausgangsseite
- 30: Nabe
- 35: Getriebeeingangswelle
- 40: Eingangsteil
- 45: Energiespeicherelement
- 50: Ausgangsteil
- 51: erste Nietverbindung
- 55: Druckfeder
- 60: Mitnehmerelement
- 65: Ausgangsflansch
- 70: Befestigungsstirnseite
- 75: Retainerraum
- 80: Fenster
- 81: Teilbereich
- 82: erste Ende
- 83: zweites Ende
- 85: erste äußere Umfangsseite
- 90: zweite äußere Umfangsseite
- 95: erster Flanschabschnitt
- 100: zweiter Flanschabschnitt
- 105: dritter Flanschabschnitt
- 110: vierter Flanschabschnitt
- 115: fünfter Flanschabschnitt
- 116: sechster Flanschabschnitt
- 120: erste Befestigungsaufnahme
- 121: Teilkreis
- 125: Stirnseite
- 130: zweite Befestigungsaufnahme
- 135: erstes Befestigungsmittel
- 140: erster Anbindungsabschnitt
- 145: zweiter Anbindungsabschnitt
- 146: Halteabschnitt
- 147: erstes radial innenseitiges Ende
- 148: erstes radial außenseitiges Ende
- 149: zweites radial innenseitiges Ende
- 150: erste Stegaufnahme
- 151: zweites radial außenseitiges Ende
- 155: zweites Befestigungsmittel
- 157: dritte Befestigungsaufnahme
- 158: zweite Stegaufnahme
- 160: dritter Anbindungsabschnitt
- 166: dritte Stegaufnahme
- 170: Fliehkraftpendel
- 175: Pendelflansch
- 180: Pendelmasse
- 185: Koppelmittel
- 190: Anlagefläche
- 195: Ringabschnitt
- 200: erster Stegabschnitt
- 205: zweiter Stegabschnitt
- 210: dritter Stegabschnitt
- 215: vierte Befestigungsaufnahme
- 216: erster Spalt
- 217: erste Aussparung
- 218: zweiter Spalt
- 220: innere Umfangsseite
- 225: zweite Aussparung
- 230: erster Aufnahmeabschnitt
- 235: zweiter Aufnahmeabschnitt
- 240: erste Ausnehmung
- 245: zweite Ausnehmung
- 250: dritte Ausnehmung
- 255: Pendelrolle
- 260: Pendelmassenausnehmung
- 265: Abstandsbolzen
- 270: Dämpferring

## Patentansprüche

1. Torsionsdämpfer (11), der drehbar um eine Drehachse (15) lagerbar ist,
- wobei der Torsionsdämpfer (11) wenigstens ein Eingangsteil (40), ein Energiespeicherelement (45) und ein Ausgangsteil (50) aufweist,
- wobei das Eingangsteil (40) gegen die Wirkung des Energiespeicherelements (45) um die Drehachse (15) gegenüber dem Ausgangsteil (50) verdrehbar ist,
- wobei das Ausgangsteil (50) ein Mitnehmerelement (60) und einen Ausgangsflansch (65) mit wenigstens einem sich in Umfangsrichtung ersteckenden ersten Flanschabschnitt (95) und einem in Umfangsrichtung an den ersten Flanschabschnitt (95) angrenzenden und sich in Umfangsrichtung erstreckenden zweiten Flanschabschnitt (100) aufweist,
- wobei der Ausgangsflansch (65) eine sich über den ersten Flanschabschnitt (95) und den zweiten Flanschabschnitt (100) hinweg erstreckende Befestigungsstirnseite (70) aufweist,
- wobei das Mitnehmerelement (60) wenigstens einen sich in radialer Richtung erstreckenden ersten Anbindungsabschnitt (140) aufweist,
- wobei der erste Anbindungsabschnitt (140) an der Befestigungsstirnseite (70) anliegt und mit dem zweiten Flanschabschnitt (100) verbunden ist,
- wobei der Ausgangsflansch (65) im ersten Flanschabschnitt (95) wenigstens eine erste Befestigungsaufnahme (120) aufweist,
- wobei die Befestigungsstirnseite (70) des ersten Flanschabschnitts (95) ausgebildet ist, an einer Anlagefläche (190) eines Pendelflanschs (175) eines Fliehkraftpendels (170) anzuliegen und die erste Befestigungsaufnahme (120) ausgebildet ist, ein erstes Befestigungsmittel (135) zur drehfesten Befestigung des Pendelflanschs (175) aufzunehmen, **dadurch gekennzeichnet, dass** der erste Anbindungsabschnitt (140) radial außenseitig des Mitnehmerelements (60) und zumindest abschnittsweise in einer Drehebene zu der Drehachse (15) verlaufend ausgebildet ist.

2. Torsionsdämpfer (11) nach Anspruch 1,
- wobei das Mitnehmerelement (60) einen in Umfangsrichtung versetzt zu dem ersten Anbindungsabschnitt (140) ausgebildeten zweiten Anbindungsabschnitt (145) aufweist,
- wobei der erste Anbindungsabschnitt (140) in Umfangsrichtung mit dem zweiten Anbindungsabschnitt (145) eine Stegaufnahme (150) begrenzt,
- wobei der Ausgangsflansch (65) die Stegaufnahme (150) mit der Befestigungsstirnseite (70) in axialer Richtung begrenzt,
- wobei die erste Befestigungsaufnahme (120) in der Stegaufnahme (150) mündet und die Stegaufnahme (150) zur Aufnahme eines Stegabschnitts (200) des Pendelflanschs (175) ausgebildet ist.

3. Torsionsdämpfer (11) nach einem der vorhergehenden Ansprüche,
- wobei der Ausgangsflansch (65) in dem ersten Flanschabschnitt (95) mehrere nebeneinander und in Umfangsrichtung versetzt zueinander angeordnete erste Befestigungsaufnahmen (120) aufweist.

4. Torsionsdämpfer (11) nach einem der vorhergehenden Ansprüche,
- wobei der Ausgangsflansch (65) in dem zweiten Flanschabschnitt (100) wenigstens eine zweite Befestigungsaufnahme (130) oder mehrere in Umfangsrichtung nebeneinander angeordnete zweite Befestigungsaufnahmen (130) aufweist,
- wobei ein zweites Befestigungsmittel (155) in die zweite Befestigungsaufnahme (130) eingreift und den ersten Anbindungsabschnitt (140) mit dem zweiten Flanschabschnitt (100) verbindet,
- wobei die erste Befestigungsaufnahme (120) und die zweite Befestigungsaufnahme (130) den gleichen Abstand zur Drehachse (15) aufweisen.

5. Torsionsdämpfer (11) nach einem der vorhergehenden Ansprüche,
- wobei die erste Befestigungsaufnahme (120) sich in axialer Richtung durch den Ausgangsflansch (65) erstreckt,
- wobei die erste Befestigungsaufnahme (120) radial nach außen zu einer ersten äußeren Umfangsseite (85) des Ausgangsflanschs (65) offen ausgebildet ist.

6. Torsionsdämpfer (11) nach einem der vorhergehenden Ansprüche,
- wobei die erste Befestigungsaufnahme (120) einen ersten Aufnahmeabschnitt (230) und einen radial außen zu dem ersten Aufnahmeabschnitt (230) angeordneten zweiten Aufnahmeabschnitt (235) aufweist,
- wobei der erste Aufnahmeabschnitt (230) einen Querschnitt mit einer maximalen ersten Erstreckung (b1) in Umfangsrichtung aufweist,
- wobei der zweite Aufnahmeabschnitt (235) sich zwischen der äußeren Umfangsseite (90) und dem ersten Aufnahmeabschnitt (230) erstreckt und sowohl an der äußeren Umfangsseite (90) als auch in dem ersten Aufnahmeschnitt (230) mündet,
- wobei der zweite Aufnahmeabschnitt (235) eine zweite maximale Erstreckung (b2) in Umfangsrichtung aufweist, die geringer als die erste maximale Erstreckung (b1) ist.

7. Torsionsdämpfer (11) nach einem der vorhergehenden Ansprüche,
- wobei die erste Befestigungsaufnahme (120) unbelegt ist und der erste Flanschabschnitt (95) frei ist.

8. Dämpfereinrichtung (10) für einen Antriebsstrang (12) eines Kraftfahrzeugs,
- aufweisend einen Torsionsdämpfer (11) nach einem der vorhergehenden Ansprüche, ein Fliehkraftpendel (170) und wenigstens ein erstes Befestigungsmittel (135),
- wobei das Fliehkraftpendel (170) einen Pendelflansch (175), wenigstens eine Pendelmasse (180) und ein Koppelmittel (185) aufweist,
- wobei das Koppelmittel (185) die Pendelmasse (180) mit dem Pendelflansch (175) koppelt und ausgebildet ist, die Pendelmasse (180) entlang einer vordefinierten Pendelbahn zu führen,
- wobei der Pendelflansch (175) eine stirnseitig angeordnete Anlagefläche (190) und eine weitere Befestigungsaufnahme (215) aufweist,
- wobei die Anlagefläche (190) des Pendelflanschs (175) an der Befestigungsstirnseite (70) am ersten Flanschabschnitt (95) anliegt,
- wobei die weitere Befestigungsaufnahme (215) und die erste Befestigungsaufnahme (120) zumindest teilweise fluchtend zueinander ausgerichtet sind,
- wobei das erste Befestigungsmittel (135) in die erste Befestigungsaufnahme (120) und die weitere Befestigungsaufnahme (215) zumindest abschnittsweise eingreift und den Pendelflansch (175) mit dem Ausgangsflansch (65) verbindet.

9. Dämpfereinrichtung (10) nach Anspruch 8,
- wobei der Pendelflansch (175) wenigstens einen sich zumindest abschnittweise in einer Drehebene zu der Drehachse (15) ausgebildeten Stegabschnitt (200) und einen Ringabschnitt (195) aufweist,
- wobei der Ringabschnitt (195) umlaufend um die Drehachse (15) ausgebildet ist,
- wobei der Stegabschnitt (200) radial innen am Ringabschnitt (195) ausgebildet ist und sich radial nach innen erstreckt,
- wobei der Stegabschnitt (200) in die Stegaufnahme (150) des Torsionsdämpfers (11) zumindest abschnittsweise eingreift.

## Claims

1. A torsional damper (11) that can be mounted rotatably about a rotational axis (15),
- wherein the torsional damper (11) has at least one input part (40), an energy storage element (45) and an output part (50),
- wherein the input part (40) can be rotated about the axis of rotation (15) relative to the output part (50) against the action of the energy storage element (45),
- wherein the output part (50) has a driver element (60) and an output flange (65) having at least one circumferentially extending first flange portion (95) and a second flange portion (100) circumferentially adjacent to the first flange portion (95) and extending in the circumferential direction,
- wherein the output flange (65) has a fastening end face (70) extending over the first flange portion (95) and the second flange portion (100),
- wherein the driver element (60) has at least one first connection portion (140) extending in the radial direction,
- wherein the first connection portion (140) bears against the fastening end face (70) and is connected to the second flange portion (100),
- wherein the output flange (65) has at least one first fastening receiver (120) in the first flange portion (95),
- wherein the fastening end face (70) of the first flange portion (95) is designed to bear against a bearing surface (190) of a pendulum flange (175) of a centrifugal pendulum (170) and the first fastening receiver (120) is designed to receive a first fastening means (135) for fastening the pendulum flange (175) in a rotationally fixed manner, **characterised in that** the first connection portion (140) is designed radially on the outside of the driver element (60) and at least in portions in a plane of rotation to the axis of rotation (15).

2. The torsional damper (11) according to claim 1,
- wherein the driver element (60) has a second connection portion (145) which is designed offset in the circumferential direction with respect to the first connection portion (140),
- wherein the first connection portion (140) delimits a web receiver (150) in the circumferential direction with the second connection portion (145),
- wherein the output flange (65) delimits the web receiver (150) with the fastening end face (70) in the axial direction,
- wherein the first fastening receiver (120) opens into the web receiver (150) and the web receiver (150) is designed to receive a web portion (200) of the pendulum flange (175).

3. The torsional damper (11) according to any one of the preceding claims,
- wherein, in the first flange portion (95), the output flange (65) has a plurality of first fastening receivers (120) arranged next to one another and offset relative to one another in the circumferential direction.

4. The torsional damper (11) according to any one of the preceding claims,
- wherein, in the second flange portion (100), the output flange (65) has at least one second fastening receiver (130) or a plurality of second fastening receivers (130) arranged next to one another in the circumferential direction,
- wherein a second fastening means (155) engages in the second fastening receiver (130) and connects the first connection portion (140) to the second flange portion (100),
- wherein the first fastening receiver (120) and the second fastening receiver (130) have the same distance from the axis of rotation (15).

5. The torsional damper (11) according to any one of the preceding claims,
- wherein the first fastening receiver (120) extends in the axial direction through the output flange (65),
- wherein the first fastening receiver (120) is designed open radially outward to a first outer circumferential side (85) of the output flange (65).

6. The torsional damper (11) according to any one of the preceding claims,
- wherein the first fastening receiver (120) has a first receiving portion (230) and a second receiving portion (235) arranged radially on the outside of the first receiving portion (230),
- wherein the first receiving portion (230) has a cross-section with a maximum first extension (b1) in the circumferential direction,
- wherein the second receiving portion (235) extends between the outer circumferential side (90) and the first receiving portion (230) and opens both on the outer circumferential side (90) and in the first receiving portion (230),
- wherein the second receiving portion (235) has a second maximum extension (b2) in the circumferential direction that is less than the first maximum extension (b 1).

7. The torsional damper (11) according to any one of the preceding claims,
- wherein the first fastening receiver (120) is unoccupied and the first flange portion (95) is free.

8. A damper device (10) for a drive train (12) of a motor vehicle,
- having a torsional damper (11) according to any one of the preceding claims, a centrifugal pendulum (170) and at least one first fastening means (135),
- wherein the centrifugal pendulum (170) has a pendulum flange (175), at least one pendulum mass (180) and a coupling means (185),
- wherein the coupling means (185) couples the pendulum mass (180) to the pendulum flange (175) and is designed to guide the pendulum mass (180) along a predefined pendulum path,
- wherein the pendulum flange (175) has a bearing surface (190) arranged on the front side and a further fastening receiver (215),
- wherein the bearing surface (190) of the pendulum flange (175) bears against the fastening end face (70) on the first flange portion (95),
- wherein the further fastening receiver (215) and the first fastening receiver (120) are at least partially aligned with one another,
- wherein the first fastening means (135) engages at least in portions in the first fastening receiver (120) and the further fastening receiver (215) and connects the pendulum flange (175) to the output flange (65).

9. The damper device (10) according to claim 8,
- wherein the pendulum flange (175) has at least one web portion (200) designed at least in portions in a plane of rotation to the axis of rotation (15) and a ring portion (195),
- wherein the ring portion (195) is designed circumferentially around the axis of rotation (15),
- wherein the web portion (200) is designed radially on the inside of the ring portion (195) and extends radially inwards,
- wherein the web portion (200) engages at least in portions in the web receiver (150) of the torsional damper (11).

## Revendications

1. Amortisseur de torsion (11) pouvant être monté de manière rotative autour d'un axe de rotation (15),
- dans lequel l'amortisseur de torsion (11) présente au moins un organe d'entrée (40), un élément de stockage d'énergie (45) et un organe de sortie (50),
- dans lequel l'organe d'entrée (40) peut tourner autour de l'axe de rotation (15) par rapport à l'organe de sortie (50) à l'encontre de l'action de l'élément de stockage d'énergie (45),
- dans lequel l'organe de sortie (50) présente un élément d'entraînement (60) et une bride de sortie (65) avec au moins une première section de bride (95) s'étendant dans la direction circonférentielle et une seconde section de bride (100) adjacente dans la direction circonférentielle à la première section de bride (95) et s'étendant dans la direction circonférentielle,
- dans lequel la bride de sortie (65) présente une face frontale de fixation (70) s'étendant à travers la première section de bride (95) et la seconde section de bride (100),
- dans lequel l'élément d'entraînement (60) présente au moins une première section de liaison (140) s'étendant dans la direction radiale,
- dans lequel la première section de liaison (140) s'appuie contre la face frontale de fixation (70) et est reliée à la seconde section de bride (100),
- dans lequel la bride de sortie (65) présente au moins un premier logement de fixation (120) dans la première section de bride (95),
- dans lequel la face frontale de fixation (70) de la première section de bride (95) est conçue pour reposer contre une surface d'appui (190) d'une bride de pendule (175) d'un pendule centrifuge (170) et le premier logement de fixation (120) est conçu pour loger un premier moyen de fixation (135) pour la fixation non rotative de la bride de pendule (175), **caractérisé en ce que** la première section de liaison (140) est formée radialement à l'extérieur de l'élément d'entraînement (60) et au moins par sections en continu dans un plan de rotation par rapport à l'axe de rotation (15).

2. Amortisseur de torsion (11) selon la revendication 1,
- dans lequel l'élément d'entraînement (60) présente une seconde section de liaison (145) qui est décalée dans la direction circonférentielle par rapport à la première section de liaison (140),
- dans lequel la première section de liaison (140) délimite un logement de traverse (150) dans la direction circonférentielle avec la seconde section de liaison (145),
- dans lequel la bride de sortie (65) délimite le logement de traverse (150) avec la face frontale de fixation (70) dans la direction axiale,
- dans lequel le premier logement de fixation (120) s'ouvre dans le logement de traverse (150) et le logement de traverse (150) est conçu pour loger une section de traverse (200) de la bride de pendule (175).

3. Amortisseur de torsion (11) selon l'une quelconque des revendications précédentes,
- dans lequel la bride de sortie (65) dans la première section de bride (95) présente une pluralité de premiers logements de fixation (120) disposés les uns à côté des autres et décalés les uns par rapport aux autres dans la direction circonférentielle.

4. Amortisseur de torsion (11) selon l'une quelconque des revendications précédentes,
- dans lequel la bride de sortie (65) dans la seconde section de bride (100) présente au moins un second logement de fixation (130) ou une pluralité de seconds logements de fixation (130) disposés les uns à côté des autres dans la direction circonférentielle,
- dans lequel un second moyen de fixation (155) vient en prise dans le second logement de fixation (130) et relie la première section de liaison (140) à la seconde section de bride (100),
- dans lequel le premier logement de fixation (120) et le second logement de fixation (130) sont équidistants par rapport à l'axe de rotation (15).

5. Amortisseur de torsion (11) selon l'une quelconque des revendications précédentes,
- dans lequel le premier logement de fixation (120) s'étend dans la direction axiale à travers la bride de sortie (65),
- dans lequel le premier logement de fixation (120) est ouvert radialement vers l'extérieur vers un premier côté périphérique externe (85) de la bride de sortie (65).

6. Amortisseur de torsion (11) selon l'une quelconque des revendications précédentes,
- dans lequel le premier logement de fixation (120) présente une première section de logement (230) et une seconde section de logement (235) disposée radialement à l'extérieur de la première section de logement (230),
- dans lequel la première section de logement (230) présente une section transversale avec une première extension maximale (b1) dans la direction circonférentielle,
- dans lequel la seconde section de logement (235) s'étend entre le côté périphérique externe (90) et la première section de logement (230) et s'ouvre à la fois sur le côté périphérique externe (90) et dans la première section de logement (230),
- dans lequel la seconde section de logement (235) présente une seconde extension maximale (b2) dans la direction circonférentielle qui est inférieure à la première extension maximale (b 1).

7. Amortisseur de torsion (11) selon l'une quelconque des revendications précédentes,
- dans lequel le premier logement de fixation (120) est inoccupé et la première section de bride (95) est libre.

8. Dispositif amortisseur (10) pour une chaîne cinématique (12) d'un véhicule automobile,
- présentant un amortisseur de torsion (11) selon l'une quelconque des revendications précédentes, un pendule centrifuge (170) et au moins un premier moyen de fixation (135),
- dans lequel le pendule centrifuge (170) présente une bride de pendule (175), au moins une masse de pendule (180) et un moyen d'accouplement (185),
- dans lequel le moyen d'accouplement (185) accouple la masse de pendule (180) à la bride de pendule (175) et est conçu pour guider la masse de pendule (180) le long d'une piste de pendule prédéfinie,
- dans lequel la bride de pendule (175) présente une surface d'appui (190) disposée sur le côté frontal et un autre logement de fixation (215),
- dans lequel la surface d'appui (190) de la bride de pendule (175) s'appuie sur la face frontale de fixation (70) sur la première section de bride (95),
- dans lequel l'autre logement de fixation (215) et le premier logement de fixation (120) sont au moins partiellement alignés à fleur l'un avec l'autre,
- dans lequel le premier moyen de fixation (135) vient en prise au moins par sections dans le premier logement de fixation (120) et l'autre logement de fixation (215) et relie la bride de pendule (175) à la bride de sortie (65).

9. Dispositif amortisseur (10) selon la revendication 8,
- dans lequel la bride de pendule (175) présente au moins une section de traverse (200) formée au moins par sections dans un plan de rotation par rapport à l'axe de rotation (15) et une section annulaire (195),
- dans lequel la section annulaire (195) est formée circonférentiellement autour de l'axe de rotation (15),
- dans lequel la section de traverse (200) est formée radialement à l'intérieur de la section annulaire (195) et s'étend radialement vers l'intérieur,
- dans lequel la section de traverse (200) vient en prise au moins par sections dans le logement de traverse (150) de l'amortisseur de torsion (11).
